# EUROPÄISCHE PATENTSCHRIFT

(11) **EP 0 746 577 B1**
(45) Veröffentlichungstag und Bekanntmachung des Hinweises auf die Patenterteilung: **12.08.1998**
(21) Anmeldenummer: 95908285.0
(22) Anmeldetag: 16.02.1995
(51) Int. Cl.: C08G 18/28, C09J 175/04

(54) **EINKOMPONENTEN-POLYURETHANKLEBSTOFFE**
SINGLE-COMPONENT POLYURETHANE ADHESIVES
ADHESIFS A BASE DE POLYURETHANE A UN COMPOSANT

(30) Priorität: 25.02.1994 DE 4406211
(43) Veröffentlichungstag der Anmeldung: 11.12.1996
(73) Patentinhaber: Henkel Kommanditgesellschaft auf Aktien, 40191 Düsseldorf (DE)
(72) Erfinder: GRÜNEWÄLDER, Bernhard, D-41363 Jüchen (DE); KLEIN, Johann, D-40233 Düsseldorf (DE); DAUTE, Peter, D-27616 Beverstedt (DE); DZIALLAS, Michael, D-42781 Haan (DE); THIELE, Lothar, D-42799 Leichlingen (DE)
(86) Internationale Anmeldenummer: EP9500570
(87) Internationale Veröffentlichungsnummer: WO9523172

(56) Entgegenhaltungen:
- WO-A-91/04998
- DE-A- 4 114 022
- US-A- 4 505 778

## Beschreibung

### Gebiet der Erfindung

Die Erfindung betrifft einkomponentige Polyurethan-Klebstoffe und ihre Verwendung zum Verkleben flexibler und starrer Substrate.

### Stand der Technik

Einkomponenten-Polyurethan-Klebstoffe sind z.B. aus dem Kunststoff-Handbuch, Band 7, Polyurethane, Hrsg. W. Becker, D.Braun, S. 650, Hanser-Verlag, München, 1993, und J. Fock, D.Schedlitzki, Adhäsion, 32, Nr.10, S.13, (1988) bekannt. Es handelt sich bei ihnen um mit Isocyanatgruppen terminierte Prepolymere, die aus Polyether- oder Polyesterpolyolen durch Umsetzung mit einem stöchiometrischen Überschuß von di- oder polyfunktionellen Isocyanaten hergestellt werden.

Gegenüber zweikomponentigen Polyurethanklebstoffen bieten sie dem Anwender den Vorteil, daß das Mischen zweier Komponenten, bei dem zudem genaue Mischungsverhältnisse eingehalten werden müssen, entfällt. Die Aushärtung der Einkomponenten-Polyurethanklebstoffe erfolgt durch den Zutritt von Wasser oder Wasserdampf, im allgemeinen in der Form von Luftfeuchtigkeit.

Sowohl lösungsmittelhaltige als auch lösungsmittelfreie Klebstoffe sind bekannt.

Aus der US 5 102 714 ist ein lösungsmittelfreier, haftklebriger Einkomponenten-Polyurethanklebstoff bekannt, dessen Verhältnis von NCO:OH ("isocyanate index") zwischen 0,85:1 und 1,15:1 liegt. Die hier beschriebenen Klebstoffe sind dadurch gekennzeichnet, daß sie sich nach dem Abbinden, falls gewünscht, wieder rückstandsfrei vom benetzten Substrat lösen lassen.

In der DE 31 39 967 Al werden beispielsweise Einkomponenten-Polyurethanklebstoffe beschrieben, die tertiäre Stickstoffatome und Phosphorsaureester enthalten und sich durch besonders kurze Abbindezeiten auszeichnen. Die Polyurethane werden hier aus di- und trifunktionellen Polyolen und technischem Diphenylmethandiisocyanat aufgebaut.

Wegen der Verwendung trifunktioneller Reaktanden steigt die Viskosität erwartungsgemäß stark an, so daß die Klebstoffe 5 bis 50 Gew.% eines gegenüber Isocyanatgruppen inerten organischen Lösungsmittels enthalten, damit Viskositäten von 1.000 bis 20.000, vorzugsweise von 3.000 bis 6.000 mPas erhalten werden.

In der EP 103 453 A2 werden Einkomponenten-Polyurethan-Klebstoffe beschrieben, die aus Reaktionsprodukten von Polyolen mit primären und sekundären OH-Gruppen und Diphenylmethandiisocyanat aufgebaut sind und als Härtungsbeschleuniger Bis-[2-N,N-(dialkylamino)alkyl)]ether enthalten. Angaben über die Viskosität der Klebstoffe sind dieser Schrift nicht zu entnehmen. Die Anwendung für die Direktverglasung von Scheiben im Automobilbau läßt jedoch eine relativ hohe Viskosität erwarten. Außerdem enthalten alle diese Klebstoffe Lösungsmittel.

In der EP 300 388 A2 werden Einkomponenten-Polyurethanklebstoffe beschrieben, denen Reaktionsprodukte aus Amin und Isocyanat zugefügt wurden, um eine Erhöhung der Viskosität bzw. eine strukturviskose Einstellung der Klebstoff-Massen zu erreichen.

In der GB 21 37 638 A werden thermisch aktivierbare Polyurethanschmelzklebstoffe beschrieben, bei denen bis zu 40 mol % der NCO-Gruppen mit einem monofunktionellen Reaktanden umgesetzt werden. Durch den monofunktionellen Reaktanden wird die Aktivierbarkeit der Klebstoffe durch Wärmeeinwirkung verlängert. Als monofunktionelle Reaktanden werden bevorzugt monofunktionelle Alkohole mit 4 bis 14 C-Atomen eingesetzt. Die offenbarten Klebstoffe enthalten zwar keine Lösungsmittel, sind aber bei Raumtemperatur fest und müssen deshalb bei Temperaturen von 60 bis 100 °C appliziert werden.

Aus der DE 12 51 521 Al ist die Umsetzung von technischem Diphenylmethandiisocyanat, das Monomere mit höherer Funktionalität als 2 enthält, mit monofunktionellen Alkoholen zur Verbesserung der Verträglichkeit mit den übrigen Komponenten von Polyurethankunststoffen beschrieben. Als geeignete Alkohole werden unter anderem die gesättigten linearen Alkohole der homologen Reihe von Ethanol bis Eicosanol genannt. Auch die Verwendung von Ricinoleylalkohol, einem bifunktionellem Alkohol, wird in Beispiel 3 genannt. Die Polyurethane werden für Gießharze und Schäume verwendet. Ein Hinweis zur Herstellung niedrigviskoser, lösungsmittelfreier, lagerstabiler einkomponentiger Polyurethanklebstoffe findet sich nicht.

Aus der EP 19 375 A2 ist bekannt, technischem Diphenylmethandiisocyanat monofunktionelle Verbindungen zuzusetzen, um seine Funktionalität zu reduzieren. Als besonders geeignet werden monofunktionelle lineare Alkanole mit 6 bis 18 C-Atomen genannt. Auch verzweigte Alkohole, Amine und Säuren, insbesondere Tallölfettsäure werden allgemein als geeignet beschrieben. Die Polyurethane werden für Schäume verwendet; ein Hinweis zur Herstellung von einkomponentigen Klebstoffen findet sich nicht.

In der bereits erwähnten EP 300 388 A2 werden zwar Addukte von monofunktionellen Verbindungen mit Polyisocyanaten beschrieben, die auch in situ erzeugt werden können, die Additionsprodukte werden aber gerade zur Erhöhung der Viskosität eingesetzt.

In der DE 41 14 022 A2 wird die Verwendung von partiell dehydratisiertem Ricinusöl als Reaktivbestandteil einer Polyolkomponente für Zweikompnenten-Polyurethanklebstoffe beschrieben. Über die Menge an dehydratisiertem Ricinusöl können die offene Zeit und die Topfzeit der Klebstoffe verlängert werden. Eine Lehre zur Herstellung niedrigviskoser, lösungsmittelfreier, lagerstabiler einkomponentiger Polyurethanklebstoffe kann der Schrift nicht entnommen werden.

Ein Teil der bisher bekannten Einkomponenten-Polyurethanklebstoffe hat den Nachteil, daß wegen der hohen Viskosität der Basispolymeren zur Erreichung einer verarbeitbaren Viskosität Lösungsmittel zugesetzt werden müssen, die unter Umständen toxikologisch bedenklich sind, auf jeden Fall aber zu einer Geruchsbelästigung führen.
Durch Verwendung von reinem Diphenylmethandiisocyanat, das frei von höherfunktionellen Anteilen ist, können zwar im Prinzip lösungsmittelfreie Klebstoffe hergestellt werden, doch steht deren Anwendung die relativ hohe Flüchtigkeit des reinen Diphenylmethandiisocyanats in Verbindung mit seinem toxikologischen Potential entgegen.

Aufgabe der Erfindung ist demnach, durch teilweise Substitution der Polyole durch im Mittel monofunktionelle Alkohole, insbesondere bei Raumtemperatur flüssige Alkohole mit Hydroxylzahlen von 30 bis 250, Einkomponenten-Polyurethanklebstoffe zur Verfügung zu stellen, die
- toxikologisch relativ unbedenkliche Polyisocyanate mit einer mittleren Funktionalität > 2, insbesondere das polymere Diphenylmethandiisocyanat, enthalten,
- eine so niedrige Eigenviskosität aufweisen, daß kein Zusatz von organischem Lösungsmittel erforderlich ist, um verarbeitbar zu sein, und
- auch nach längerer Lagerung sowohl bei hohen als auch tiefen Temperaturen weder einen nicht akzeptablen Viskositätsanstieg noch Ausfällungen zeigen, und
- keinerlei Einbußen bezüglich der klebetechnischen Eigenschaften aufweisen.

### Beschreibung der Erfindung

Gegenstand der Erfindung sind Einkomponenten-Polyurethanklebstoffe mit einer Brookfield Viskosität bei 20 °C von 3 000 bis 25 000 mPas (Brookfield Viskosimeter LVT, Spindel 6, 20 U/min), enthaltend
a) Prepolymere, herstellbar durch Reaktion von Alkoholen mit einem stöchiometrischen Überschuß von polyfunktionellen Isocyanaten mit einer mittleren Funktionalität größer als 2 und bis zu 4,
b) gewünschtenfalls Zusatzstoffe,
c) gewünschtenfalls bis zu 5 Gew.-% Lösungsmittel,
bei denen die Alkohole Mischungen von Polyolen mit im Mittel monofunktionellen Alkoholen, die bei 18 bis 23 °C flüssig sind und eine Hydroxylzahl von 30 bis 250, bevorzugt 50 bis 150, aufweisen, darstellen.

Ein weiterer Gegenstand der Erfindung ist die Verwendung dieser Klebstoffe zur Verklebung beliebiger Substrate.

Die erfindungsgemäßen Prepolymeren können durch Umsetzung von Polyisocyanaten mit Alkoholen, die Mischungen von Polyolen mit im Mittel monofunktionellen Alkoholen darstellen, unter Ausbildung von Urethangruppen und endständigen Isocyanatgruppen erhalten werden.

Als Polyole können die dem Fachmann bekannten, in der Polyurethanchemie üblichen Polyether- und Polyester-Polyole verwendet werden, wie sie z.B. in Ullmannns Enzyklopädie der technischen Chemie, 4. Auflage, Band 19, S. 304-5, Verlag Chemie, Weinheim, beschrieben sind.

Die verwendeten Polyole sind bevorzugt difunktionell und weisen Hydroxylzahlen von 10 bis 200, bevorzugt von 25 bis 100 auf.

Wegen ihrer niedrigen Ausgangsviskosität werden bevorzugt Polyetherpolyole auf der Basis von Propylenoxid eingesetzt, besonders bevorzugt difunktionelle Polypropylenglykole mit Molekulargewichten (Zahlenmittel) von 1000 bis 6000.

Aus der Definition der mittleren Funktionalität der polyfunktionellen Isocyanate von > 2 geht hervor, daß sowohl Isocyanate mit einer Funktionalität von 3 oder höher allein oder in Abmischung mit Isocyanaten mit einer Funktionalität von 2 verwendet werden können.

Die Obergrenze der mittleren Funktionalität der polyfunktionellen Isocyanate liegt bei 4.

Als polyfunktionelle Isocyanate mit einer mittleren Funktionalität > 2 können die in der Polyurethanchemie üblichen, dem Fachmann bekannten Produkte eingesetzt werden, wie sie z.B. in Ullmannns Enzyklopädie der technischen Chemie, 4. Auflage, Band 19, S. 303-4, Verlag Chemie, Weinheim, beschrieben sind. Als Beispiele seien über Biuretgruppen trimerisierte Isocyanate, wie etwa trimerisiertes Hexamethylendiisocyanat Desmodur^{(R)} N, oder deren Gemische mit Diisocyanaten oder über Isocyanuratgruppen trimerisierte Isocyanate oder ihre Gemische mit Diisocyanaten genannnt. Auch die Addukte von Diisocyanaten an Polyole, z.B. von Toluylendiisocyanat an Trimethylolpropan sind geeignet. Bevorzugt werden aromatische di- oder polyfunktionelle Isocyanate eingesetzt, besonders bevorzugt Diphenylmethandiisocyanat in seiner technischen, höherfunktionelle Moleküle enthaltenden Qualität, die z.B. unter der Bezeichnung Desmodur^{(R)} VKS-H (Bayer AG, Leverkusen) im Handel ist.

Die zur anteiligen Substitution der Polyole eingesetzten monofunktionellen Alkohole müssen so beschaffen sein, daß die klebetechnischen Eigenschaften nicht negativ beeinflußt werden. Weiterhin darf auch nach längerer Lagerung bei tiefen oder höheren Temperaturen keine Veränderung des Klebstoffs auftreten, dergestalt, daß sich Ausfällungen bilden oder es zu einem Viskositätsanstieg auf über 25.000 [mPas] kommt.

Geeignete monofunktionelle Alkohole liegen bei Raumtemperatur in flüssiger Form vor, wobei unter Raumtemperatur Temperaturen von 18 bis 23 °C zu verstehen sind. Die geeigneten Alkohole haben Hydroxylzahlen von 30 bis 250, bevorzugt von 50 bis 150. Besonders geeignet im Sinne der Erfindung sind die sogenannten Guerbet-Alkohole, die durch Selbstkondensation von Alkoholen unter dem Einfluß von Alkali bei 200 bis 260 °C gebildet werden. Besonders eignen sich Guerbetalkohole mit 16 bis 28 C-Atomen.
Auch die Umsetzungsprodukte von Guerbetalkoholen mit Alkylenoxiden, vorzugsweise Propylenoxid, sind im Sinne der Erfindung verwendbar.

Weiterhin eignen sich Monoalkohole, die sich von Estern der Ricinolsäure mit Alkoholen ableiten, z.B. Ricinolsäuremethylester.

Neben den Guerbetalkoholen, die überwiegend in streng monofunktioneller Form vorliegen, eignen sich auch solche Hydroxylverbindungen, die eine mittlere Funktionalität von etwa 1 aufweisen.

Besonders gut eignet sich für diesen Zweck partiell dehydratisiertes Ricinusöl mit Hydroxylzahlen von 50 bis 150, bevorzugt von 60 bis 110. Das partiell dehydratisierte Ricinusöl kann auf an sich bekannte Weise, z.B. nach der Lehre der britschen Patentschrift GB-B 671 638 aus Ricinusöl durch Zusatz von ca. 0,5 Gew.% phosphoriger Säure durch Erhitzen auf 230 bis 260 °C hergestellt werden.

Weiterhin eignen sich Triglyceride von ungesättigten Fettsäuren, die durch partielle oder vollständige Epoxidation und nachfolgende partielle oder vollständige Ringöffnung mit Alkoholen oder Carbonsäuren in im statistischen Mittel monofunktionelle Alkohole überführt wurden. Auch partiell acylierte Ringöffnungsprodukte epoxidierter Triglyceride mit Alkoholen sind geeignet.

Die erfindungsgemäßen Monoalkohole werden zur Substitution der Polyole in Mengen von 5 bis 60 Gew.%, bevorzugt 15 bis 40 Gew.% bezogen auf das Polyol eingesetzt.

Den erfindungsgemäßen Prepolymeren können Zusatzstoffe wie Katalysatoren zur Beschleunigung der Aushärtung, z.B. tertiäre Amine wie Dimorpholinodiethylether, Bis-[2-N,N-(dimethylamino)ethyl]ether oder Sn-Verbindungen wie z.B. Dibutylzinndilaurat oder Zinn-II-octoat, Alterungs- und Lichtschutzmittel, Trockenmittel, Stabilisatoren, z.B. Benzoylchlorid, Haftvermittler zur Verbesserung des Adhäsion, Weichmacher, z.B. Dioctylphthalat, sowie Pigmente und Füllstoffe zugegeben werden.
Die Mengen der Zusatzstoffe liegen zwischen 0,01 und etwa 20 Gew.% bezogen auf den Klebstoff.

Es ist möglich, wenngleich nicht bevorzugt, auch Lösungsmittel, wie z.B. aromatische Lösungsmittel oder Ester wie Butylacetat oder Dimethylformamid den erfindungsgemäßen Klebstoffen in Mengen von bis zu 5 Gew.% - bezogen auf den Klebstoff - zuzusetzen.

Bei Verwendung von Zusatzstoffen und Lösungsmittel verringert sich der Anteil des erfindungsgemäßen Präpolymeren in der Zubereitung, in der Regel entsprechend dem Anteil der Zusatzstoffe und des Lösungsmittels, auf mindestens 75%.

Wegen der Feuchtigkeitsempfindlichkeit der Isocyanate sollte in der Regel unter sorgfältigem Ausschluß von Wasser gearbeitet werden, d.h., es müssen wasserfreie Rohstoffe eingesetzt werden, und der Zutritt von Feuchtigkeit während der Reaktion ist zu vermeiden.

Die Herstellung der Prepolymere kann durch Umsetzung des Gemisches aus Polyolen und monofunktionellem Alkohol mit einem stöchiometrischen Überschuß von di- oder polyfunktioneller Isocyanatverbindung erfolgen.
Nach einer anderen Ausführungsform ist es auch möglich, die monofunktionelle Hydroxylverbindung in einer vorgeschalteten Reaktion mit der Isocyanatverbindung umzusetzen.

Üblicherweise werden das Polyol und der im Mittel monofunktionelle Alkohol bei Raumtemperatur vorgelegt und unter Rühren vermischt. Falls gewünscht, kann ein Beschleuniger zugegeben werden. Anschließend wird das Polyisocyanat unter Rühren zugefügt. Falls gewünscht, kann dabei auf Temperaturen von 50 bis 150 °C erwärmt werden.
Das NCO:OH-Äquivalent-Verhältnis liegt dabei zwischen 2,5:1 bis 15:1, bevorzugt zwischen 4:1 und 10:1.

Man läßt die Mischung solange reagieren, bis der theoretische Gehalt an NCO-Gruppen erreicht ist, d.h. der Wert, der sich ergibt, wenn alle Hydroxylgruppen abreagiert sind und nur noch überschüssige NCO-Gruppen vorliegen. In der Regel betragen die Reaktionszeiten zwischen 10 Minuten und 3 Stunden.

Nach Erreichen des gewünschten NCO-Gehaltes läßt man das Prepolymer abkühlen. Falls gewünscht, können anschließend noch weitere Zusatzstoffe wie Trockenmittel, Stabilisatoren oder Härtungsbeschleuniger zugefügt werden.

Die auf diese Weise hergestellten Klebstoffe weisen Viskositäten von 3.000 bis 25.000 mPas, bevorzugt 5.000 bis 10.000 mPas auf, bestimmt mit dem Brookfield-Viskosimeter LVT, mit Spindel 6, bei 20 Umdrehungen pro Minute bei 20°C.

Bis zu ihrer Verwendung werden die Klebstoffe in verschlossenen Gebinden unter Ausschluß von Feuchtigkeit gelagert.

Der Auftrag der einkomponentigen Klebstoffe auf die Substrate kann durch Gießen, Streichen, Rakeln, Walzen, Spritzen oder Auftragen einer Klebstoffraupe erfolgen.

Bevorzugt werden einkomponentige Polyurethanklebstofe für solche Substrate eingesetzt, die bereits Wasser enthalten oder einen leichten Zutritt von Luftfeuchtigkeit ermöglichen. Dazu gehören Werkstoffe wie Holz, Spanplatten, Schaumstoffe und andere poröse Substrate. Sofern für die Aushärtung Feuchtigkeit ausschließlich aus der Luft geliefert werden muß, darf die relative Feuchte gewisse Mindestwerte, in der Regel 40 Prozent bei Raumtemperatur nicht unterschreiten. Andernfalls kann durch Aufsprühen von Wassernebeln die erforderliche Feuchtigkeit zugeführt werden.

Nach dem Klebstoffauftrag müssen die Substrate innerhalb eines gewissen Zeitraums, der offenen Zeit, zusammengefügt werden. Die offene Zeit kann je nach verarbeitungstechnischen Anforderungen von wenigen Minuten bis zu mehreren Stunden variieren. Sie wird wesentlich bestimmt durch die chemische Zusammensetzung des Klebstoffs, die relative Luftfeuchtigkeit und die Temperatur.

Das Verkleben der Substrate kann unter einem geringen Anpreßdruck von etwa 2 bis 20 N/cm² erfolgen, bis der Klebstoff eine gewisse Anfangsfestigkeit erreicht hat.

Die erfindungsgemäßen Einkomponenten-Polyurethanklebstoffe können für wichtige industrielle Klebeprozesse verwendet werden, z.B. für die großflächige Verklebung von Schichtstoffplatten, für die Verklebung von Blechen, die Verklebung von Kunststoffen und von Holzwerkstoffen. Auch die Anwendung im Bausektor zur Verklebung von Zement und Gipsplatten oder Mineralfaserplatten ist denkbar.
Eine weitere Anwendungsmöglichkeit liegt in der Verklebung von Weichschaumplatten für Dichtungs- und Verpackungszwecke. Auch die Verklebung von Folienverbunden ist möglich.

### Beispiele

Alle prozentuale Angaben in den Beispielen verstehen sich, sofern nicht anders angegeben, als Gewichtsprozent.

### Beispiel 1:

### Auswahl geeigneter Monoalkohole

Um den Einfluß von verschiedenen Monoalkoholen bei der Reaktion mit höherfunktionellem technischen Diphenylmethandiisocyanat zu überprüfen, wurde technisches MDI (Desmodur VKS-H^{(R)}, Bayer), das eine Funktionalität von 2,7 besitzt, mit soviel Monoalkohol umgesetzt, daß eine mittlere Funktionalität von 2,0 resultiert.
Dafür wurden jeweils 100 g Desmodur VKS-H^{(R)} mit den in Tabelle 1 angegebenen Mengen der verschiedenen Monoalkohole bei 50 °C umgesetzt, bis der angegebene NCO-Gehalt erreicht war. Anschließend wurde die Viskosität mit dem Brookfield-Viskosimeter bei 20 °C mit Spindel 6 bei 20 Umdrehungen pro Minute gemessen.

**Tabelle 1:**

| Bsp | Monoalkohol | Menge [g] | NCO-Gehalt [%] | Viskosität [mPas] |
|---|---|---|---|---|
| la | Methanol | 5,9 | 22,0 | 10.000 |
| 1b | Ethanol | 8,5 | 21,4 | 7.000 |
| 1c | 1-Propanol | 11,1 | 20,9 | 5.250 |
| 1d | 2-Propanol | 11,1 | 20,9 | kristallin |
| 1e | 1-Butanol | 13,7 | 20,4 | 6.750 |
| 1f | 1-Octanol | 24,0 | 18,8 | kristallin |
| 1g | 2-Ethylhexanol | 24,0 | 18,8 | 4.250 |
| 1h | Rilanit G 20 | 54,5 | 15,1 | 1.400 |
| 1i | Edenor MeRi | 67,7 | 13,9 | 1.750 |
| 1j | Lorol C 18 | 50,0 | 15,6 | kristallin |

Rilanit G 20^{(R)} (Henkel) ist ein Guerbetalkohol mit 20 C-Atomen und einer Hydroxylzahl von 190.
Edenor MeRi^{(R)} (Henkel) ist Ricinolsäuremethylester mit einer Hydroxylzahl von 153.
Lorol C 18^{(R)} (Henkel) ist technischer Stearylalkohol mit einer Hydroxylzahl von 206.

Nur mit den bei Raumtemperatur flüssigen Monoalkoholen der Beispiele lh und li mit einer Hydroxylzahl unter 250 kann die gewünschte niedrige Viskosität erreicht werden.

### Beispiel 2:

### Herstellung eines niedrigviskosen 1-K-Polyurethan-Klebstoffs

| Ansatz: | | |
|---|---|---|
| A) | 500,0 g | Desmodur VKS-H^{(R)} |
| B) | 200,0 g | partiell dehydratisiertes Ricinusöl, OHZ = 70 |
| C) | 300,0 g | Polypropylenglykol, OHZ = 28 |
| D) | 0,5 g | Formrez UL 24^{(R)} |
| E) | 0,5 g | Benzoylchlorid |
| F) | 0,8 g | Bis-[2-N,N-(dimethylamino)ethyl]ether |

Formrez UL 24^{(R)} (Firma Witco) ist ein Sn-haltiger Beschleuniger.

### Herstellung:

Die Komponenten A, B und C wurden unter Stickstoff in einem Rühraggregat gemischt und mit der Komponente D versetzt. Unter Rühren und Erwärmen wurde die Temperatur bis auf 120 °C gebracht und danach noch 10 Minuten bei dieser Temperatur gerührt, bis ein NCO-Gehalt von 13,8% erreicht war. Die Reaktionsmischung wurde auf 80 °C abgekühlt und die Komponente E zugegeben. Nach dem Abkühlen auf Raumtemperatur wurde die Komponente F eingerührt.
Man erhielt einen klaren, hellbraunen Klebstoff mit folgenden Eigenschaften:

| | |
|---|---|
| NCO-Gehalt | 13,8 % |
| | |
| Viskosität nach Herstellung | 7.000 mPas |
| Viskosität nach 5 Wochen Lagerung bei 40 °C | 8.700 mPas |
| Viskosität nach 12 Wochen Lagerung bei 40 °C | 12.200 mPas |
| | |
| offene Zeit auf Buche 20 °C, 65 % rel. Luftfeuchte | 15 min |
| Wärmestandfestigkeit bei 80 °C geprüft nach Watt 91 | 11,0 N/mm² |
| Zugscherfestigkeit nach Belastung EN 204 D3 | 5,4 N/mm² |
| Zugscherfestigkeit nach Belastung EN 204 D4 | 6,2 N/mm² |

Die Messung der Viskosität erfolgte wie in Beispiel 1 beschrieben.

Die Wärmestandfestigkeit wird mit dem vom Fachverband der Klebstoffindustrie entwickelten Wood Adhesives Temperature Test WATT'91 geprüft.
Die Messung der Zugscherfestigkeit wird nach der europäischen Norm EN 204 durchgeführt.
Für die Beanspruchungsgruppe D3 werden die Klebeverbindungen nach 7 Tagen Lagerung bei Normklima 4 Tage in kaltem Wasser belastet; für die Beanspruchungsgruppe D4 werden die Klebeverbindungen nach 7 Tagen Lagerung bei Normklima 6 Stunden in kochendem Wasser belastet.
Die Messung der Zugscherfestigkeit erfolgt jeweils 7 Tage nach der Belastung.

### Beispiel 3:

### Herstellung eines niedrigviskosen 1-K-Polyurethan-Klebstoffs

| Ansatz: | | |
|---|---|---|
| A) | 500,0 g | Desmodur VKS-H^{(R)} |
| B) | 300,0 g | partiell dehydratisiertes Ricinusöl, OHZ = 70 |
| C) | 300,0 g | Polypropylenglykol, OHZ = 28 |
| D) | 0,5 g | Formrez UL 24^{(R)} |
| E) | 0,5 g | Benzoylchlorid |
| F) | 0,8 g | Bis-[2-N,N-(dimethylamino)ethyl]ether |

Die Herstellung erfolgte wie in Beispiel 2 beschrieben.

Man erhält einen klaren, hellbraunen Klebstoff mit folgenden Eigenschaften:

| | |
|---|---|
| NCO-Gehalt | 12,0 % |
| | |
| Viskosität nach Herstellung | 7.600 mPas |
| Viskosität nach 5 Wochen Lagerung bei 40 °C | 8.500 mPas |
| Viskosität nach 12 Wochen Lagerung bei 40 °C | 10.000 mPas |
| | |
| offene Zeit auf Buche 20 °C, 65 % rel. Luftfeuchte | 15 min |
| Wärmestandfestigkeit bei 80 °C geprüft nach Watt 91 | 8,5 N/mm² |
| Zugscherfestigkeit nach Belastung EN 204 D3 | 6,8 N/mm² |
| Zugscherfestigkeit nach Belastung EN 204 D4 | 6,4 N/mm² |

### Vergleichsbeispiel 1:

Klebstoff auf Basis von reinem Diphenylmethandiisocyanat

| Ansatz: | | |
|---|---|---|
| A) | 500,0 g | Diphenylmethandiisocyanat, rein |
| B) | 200,0 g | partiell dehydratisiertes Ricinusöl, OHZ = 70 |
| C) | 300,0 g | Polypropylenglykol, OHZ = 28 |
| D) | 0,5 g | Formrez UL 24^{(R)} |
| E) | 0,5 g | Benzoylchlorid |
| F) | 0,8 g | Bis-[2-N,N-(dimethylamino)ethyl]ether |

Die Herstellung erfolgte wie in Beispiel 2 beschrieben.

Man erhält einen klaren, hellbraunen Klebstoff mit folgenden Eigenschaften:

| | |
|---|---|
| NCO-Gehalt | 15,1 % |
| | |
| Viskosität nach Herstellung | 1.200 mPas |
| Viskosität nach 5 Wochen Lagerung bei 40 °C | 2.000 mPas |
| Viskosität nach 12 Wochen Lagerung bei 40 °C | 4.000 mPas |
| | |
| offene Zeit auf Buche 20 °C, 65 % rel. Luftfeuchte | 15 min |
| Wärmestandfestigkeit bei 80 °C geprüft nach Watt 91 | 2,9 N/mm² |
| Zugscherfestigkeit nach Belastung EN 204 D3 | 0,7 N/mm² |
| Zugscherfestigkeit nach Belastung EN 204 D4 | 0,3 N/mm² |

### Vergleichsbeispiel 2:

Klebstoff auf Basis von polymerem Diphenylmethandiisocyanat ohne momofunktionelle Verbindung als Ersatz für Polyol

| Ansatz: | | |
|---|---|---|
| A) | 500,0 g | Desmodur VKS-H^{(R)} |
| C) | 500,0 g | Polypropylenglykol, OHZ = 28 |
| D) | 0,5 g | Formrez UL 24^{(R)} |
| E) | 0,5 g | Benzoylchlorid |
| F) | 0,8 g | Bis-[2-N,N-(dimethylamino)ethyl]ether |

Die Herstellung erfolgte wie in Beispiel 2 beschrieben. Man erhält einen klaren, hellbraunen Klebstoff mit folgenden Eigenschaften:

| | |
|---|---|
| NCO-Gehalt | 14,4 % |
| | |
| Viskosität nach Herstellung | 5.600 mPas |
| Viskosität nach 5 Wochen Lagerung bei 40 °C | 84.000 mPas |
| Viskosität nach 12 Wochen Lagerung bei 40 °C | geliert |
| | |
| offene Zeit auf Buche 20 °C, 65 % rel. Luftfeuchte | 15 min |
| Wärmestandfestigkeit bei 80 °C geprüft nach Watt 91 | 10,2 N/mm² |
| Zugscherfestigkeit nach Belastung EN 204 D3 | 6,3 N/mm² |
| Zugscherfestigkeit nach Belastung EN 204 D4 | 5,3 N/mm² |

## Patentansprüche

1. Einkomponenten-Polyurethanklebstoffe mit einer Brookfield Viskosität bei 20 °C von 3 000 bis 25 000 mPas (Brookfield Viskosimeter LVT, Spindel 6, 20 U/min), enthaltend
a) Prepolymere, herstellbar durch Reaktion von Alkoholen mit einem stöchiometrischen Überschuß von polyfunktionellen Isocyanaten mit einer mittleren Funktionalität größer als 2 und bis zu 4, wobei das NCO:OH-Äquivalentverhältnis zwischen 2,5:1 bis 15:1 liegt,
b) gewünschtenfalls Zusatzstoffe,
c) gewünschtenfalls bis zu 5 Gew.-% Lösungsmittel,
dadurch gekennzeichnet, daß die Alkohole Mischungen von Polyolen mit im Mittel monofunktionellen Alkoholen, die bei 18 bis 23°C flüssig sind und eine Hydroxylzahl von 30 bis 250, bevorzugt 50 bis 150, aufweisen, darstellen.

2. Einkomponenten-Polyurethanklebstoffe nach Anspruch 1, dadurch gekennzeichnet, daß die Mischungen aus Polyolen und im Mittel monofunktionellen Alkoholen 5 bis 60 Gew.%, bevorzugt 15 bis 40 Gew.% der im Mittel monofunktionellen Alkohole enthalten.

3. Einkomponenten-Polyurethanklebstoffe nach den Anspruchen 1 oder 2, dadurch gekennzeichnet, daß die Polyole Polyether auf Basis von Polypropylenoxid darstellen.

4. Einkomponenten-Polyurethanklebstoffe nach den Ansprüchen 1 bis 3, dadurch gekennzeichnet, daß der im Mittel monofunktionelle Alkohol dehydratisiertes Ricinusöl mit einer Hydroxylzahl von 50 bis 150, bevorzugt 60 bis 110 darstellt.

5. Einkomponenten-Polyurethanklebstoffe nach den Ansprüchen 1 bis 4, dadurch gekennzeichnet, daß die Zusatzstoffe aus den Gruppen der Katalysatoren, Alterungs- und Lichtschutzmittel, Trockenmittel, Stabilisatoren, Haftvermittler, Weichmacher, Pigmente und Füllstoffe ausgewählt sind.

6. Einkomponenten-Polyurethanklebstoffe nach den Ansprüchen 1 bis 5, dadurch gekennzeichnet, daß sie 0,01 bis etwa 20 Gew.% - bezogen auf Klebstoff - an Bis-[2-N,N-(dialkylamino)alkyl)]ethern, Zinn-Verbindungen und Säurechloriden von Carbonsäuren enthalten.

7. Verwendung der Einkomponenten-Polyurethanklebstoffe nach den Ansprüchen 1 bis 6 zum Verkleben von flexiblen und starren Substraten.

## Claims

1. One-component polyurethane adhesives with a Brookfield viscosity at 20°C of 3,000 to 25,000 mPas (Brookfield LVT viscosimeter, spindle 6, 20 r.p.m.) containing
a) prepolymers obtainable by reaction of alcohols with a more than stoichiometric quantity of polyfunctional isocyanates having an average functionality of greater than 2 and up to 4, the NCO:OH equivalent ratio being between 2.5:1 and 15:1,
b) optionally additives,
c) optionally up to 5% by weight of solvent,
characterized in that the alcohols are mixtures of polyols with on average monohydric alcohols which are liquid at 18 to 23°C and have a hydroxyl value of 30 to 250 and preferably 50 to 150.

2. One-component polyurethane adhesives as claimed in claim 1, characterized in that the mixtures of polyols and on average monohydric alcohols contain 5 to 60% by weight and preferably 15 to 40% by weight of the on average monohydric alcohols.

3. One-component polyurethane adhesives as claimed in claim 1 or 2, characterized in that the polyols are polyethers based on polypropylene oxide.

4. One-component polyurethane adhesives as claimed in claims 1 to 3, characterized in that the on average monohydric alcohol is dehydrated castor oil with a hydroxyl value of 50 to 150 and preferably 60 to 110.

5. One-component polyurethane adhesives as claimed in claims 1 to 4, characterized in that the additives are selected from catalysts, antiagers and light stabilizers, drying agents, stabilizers, coupling agents, plasticizers, pigments and fillers.

6. One-component polyurethane adhesives as claimed in claims 1 to 5, characterized in that they contain 0.01 to about 20% by weight - based on adhesive - of bis-[2-N,N-(dialkylamino)alkyl)]ethers, tin compounds and acid chlorides of carboxylic acids.

7. The use of the one-component polyurethane adhesives claimed in claims 1 to 6 for bonding flexible and rigid substrates.

## Revendications

1. Adhésifs en polyuréthanne à un seul composant ayant une viscosité Brookfield à 20°C allant de 3000 à 25.000 mPa.s (Viscosimètre Brookfield LVT tige 6, 20 t/min) qui contiennent :
a) des prépolymères que l'on peut obtenir par réaction d'alcools avec un excès par rapport à la stoechiométrie d'isocyanates polyfonctionnels avec une fonctionnalité moyenne plus grande que 2 et jusqu'à 4, pour lesquels le rapport en équivalents NCO/OH se situe entre 2,5 : 1 et 15 : 1,
b) si désiré des additifs,
c) si désiré jusqu'à 5 % en poids de solvant
caractérisés en ce que
les alcools représentent des mélanges de polyols avec des alcools en moyenne monofonctionnels qui sont liquides de 18 à 23°C, et qui possèdent un indice d'hydroxyle de 30 à 250, de préférence de 50 à 150.

2. Adhésifs en polyuréthanne à un seul composant selon la revendication 1,
caractérisés en ce que
les mélanges à base de polyols et d'alcools en moyenne monofonctionnels renferment de 5 à 60 % en poids, de préférence de 15 à 40 % en poids, d'alcools en moyenne monofonctionnels.

3. Adhésifs en polyuréthanne à un seul composant selon les revendications 1 ou 2,
caractérisés en ce que
les polyols représentent des polyéthers à base d'oxyde de polypropylène.

4. Adhésifs en polyuréthanne à un seul composant selon les revendications 1 à 3,
caractérisés en ce que
l'alcool en moyenne monofonctionnel représente de l'huile de ricin déshydratée ayant un indice d'hydroxyle allant de 50 à 150, de préférence de 60 à 110.

5. Adhésifs en polyuréthanne à un seul composant selon les revendications 1 à 4,
caractérisés en ce que
les additifs sont choisis dans les groupes des catalyseurs, des agents de protection contre le vieillissement et la lumière, des agents siccatifs, des agents stabilisants, des promoteurs d'adhésion, des agents plastifiants, des pigments et des substances de charge.

6. Adhésifs en polyuréthanne à un seul composant selon les revendications 1 à 4,
caractérisés en ce qu'
ils renferment de 0,01 à environ 20 % en poids, rapporté à l'adhésif, de bis-[2-N,N-dialkylaminoalkyl]éthers, des composés de l'étain, et des chlorures d'acide d'acides carboxyliques.

7. Utilisation des adhésifs en polyuréthanne à un seul composant selon les revendications 1 à 6, en vue de l'encollage de substrats flexibles et rigides.
